# EUROPEAN PATENT APPLICATION

(11) **EP 4 570 427 A1**
(43) Date of publication of application: **18.06.2025**
(21) Application number: 23383296.3
(22) Date of filing: 14.12.2023
(51) Int. Cl.: B23Q 11/00, B23B 27/02, F16F 7/104, B23Q 5/10

(54) **PASSIVE DAMPING SYSTEM FOR A CANTILEVER ROTATING SHAFT**

(71) Applicant: Ideko, S.Coop., 20870 Elgoibar (Gipuzkoa) (ES)
(72) Inventor: MERINO HERNANDEZ, Ruben, 20870 Elgoibar (Gipuzkoa) (ES); MANCISIDOR AIZPURUA, Iker, 20870 Elgoibar (Gipuzkoa) (ES); SANZ CALLE, Markel, 20870 Elgoibar (Gipuzkoa) (ES); BARRIOS AZCONAGA, Asier, 20870 Elgoibar (Gipuzkoa) (ES)
(74) Representative: Plasseraud IP

(57) **Abstract**

The present invention relates to a passive damping system (1) for a cantilever rotating shaft (40) of a machine tool (100) that comprises a tie (20) for holding a tool or part to be machined at one end of the rotating shaft (40), said passive damping system (1) being able to be fixed at the end of the shaft (40) opposite to the tie (20) by means of a casing (11) that houses an inertial mass (10), the annular inertial mass (10) being arranged suspended inside the casing (11) by a circumferential correlation of a plurality of elastic suspension elements (12) arranged on both opposite flat faces (13) of the inertial mass (10), the suspension elements (12) being on the casing determining the damping of the radial vibration produced in the rotating shaft (40) during machining.

## Description

### TECHNICAL FIELD

The present invention relates to passive damping systems for rotating shafts, and more specifically to the industry dedicated to vibration damping in rotating shafts for the machining of parts with machine tools.

### BACKGROUND OF THE INVENTION

In the machining of parts, the contact between the tool and a part to be machined can give rise to vibrations in the machining system, which in turn usually cause imperfections in said part. In the specific case where the workpart or machining tool is cantilevered on a rotating shaft, the dynamic flexibility of the structure can give rise to self-excited vibrations or chatter, which causes defects in the part that are known in the industry as chattering. This phenomenon limits the maximum depth of pass to be used and, therefore, the productivity of the machine tools. If the decision is made not to sacrifice productivity and ignore said maximum depth, the quality of the parts decreases significantly.

Currently, methods for damping or reducing vibrations in the machining of parts are widely known. Passive vibration damping or reduction methods are also known, in other words, damping methods in which no external force is applied to the system to counteract said vibrations. Since the vibrations are induced by the contact between the tool and the part to be machined, the maximum amplitude of the vibrations is usually found at a position close to said cutting point. Said vibration damping or reduction systems usually comprise a damping element located at a point in the machining system close to the tool, in other words, close to the cutting point. However, the problem arises of having smaller spaces in which said damping elements are to be placed, since said damping elements can collide with elements in the working area, which, in turn, also limits the damping effect they have on the system, where it is not possible to damp the different vibration frequencies due to the use of different tools, thermal conditions, etc.

In view of the described disadvantage or limitation exhibited by the currently existing solutions, a solution that allows a greater damping effect is required, providing a greater range of dampable frequencies over a greater number of directions.

### DESCRIPTION OF THE INVENTION

To meet this objective and solve the technical problems discussed so far, in addition to providing additional advantages that can be derived later, the present invention provides a passive damping system for a cantilever rotating shaft of a machine tool of the type comprising a tie for holding a tool or part to be machined at one end of the rotating shaft. The passive damping system comprises an annular inertial mass and can be fixed at the opposite end of the shaft to the tie by means of a casing that houses said inertial mass. The annular inertial mass is arranged suspended inside the casing by a circumferential correlation of a plurality of elastic suspension elements. Said elastic suspension elements are arranged on both opposite flat faces of the inertial mass and are fixed to the casing, determining the damping of the radial vibration produced in the rotating shaft during machining.

Having a damping system that can be fixed by means of a casing, comprising a suspended inertial mass, makes it possible for said inertial mass to tend to remain on the same axis of rotation when the inertial mass rotates integrally with the rotation of the machine's axis of rotation. Depending on the degree of elasticity of the suspension elements, the plurality of said elements will provide a natural frequency of radial excitation to the inertial mass. By tuning said natural frequency to the excitation frequencies at which the machine usually vibrates, the inertial mass acts as resistance to said vibrations and, therefore, reduces them. In this way, the vibrations present in the shaft of the machine tool system are counteracted or, in other words, damped. Said damping is carried out based on the connection between the inertial mass and the casing fixed to the machine through the plurality of elastic suspension elements, which transmit forces between said inertial mass and the casing fixed to the machine. Therefore, by tuning the plurality of suspension elements according to the vibration frequency to be damped, the aforementioned chatter and consequently the manufacturing defects derived from the same can be avoided.

Fixing the damping system on the side of the axis of rotation opposite to that of the tie contributes to an alternative to vibration attenuation, and in many cases, an improvement to the known solutions in which the damper is arranged as close as possible to the tool, especially in cases where there is a long cantilever on the portion opposite the tool or part. The arrangement of the present invention also allows there to be more space at the end of the tie shaft of the tool or part.

Preferably, the casing of the damping system comprises two side covers to which the plurality of suspension elements are fixed so that it can be fixed to the casing, where at least one of the side covers can be fixed to the casing by joining means.

Given this configuration, the inertial mass is fixed suspended to the end of the rotating shaft, being easily removable by disassembling the corresponding cover, so that the inertial mass is suspended integrally to said casing. In this way, a transmission of elastic forces between the inertial mass and the casing is also ensured, which is integral with the cantilever rotating shaft on which the tie rotates. Thus, greater ease of maintenance and disassembly for modifying the tuning of the elastic suspension elements is provided.

Preferably, the machine tool is a lathe that comprises a pulley for transmitting the rotation of the shaft, said pulley being arranged at the end of the shaft opposite to the tie of the part, the casing being fixed to the pulley.

The fact that the casing is fixed at an end opposite the tool tie allows the damping system to have much larger dimensions than if it were at the end of the tie. Despite usually being the point of greatest vibration amplitude, at the end where the tie and the tool are located, the number of components for said tie and the achievement of a good grip of the tool limits the available spaces where a passive damping system can be placed. The damping capacity of the inertial mass is directly related to its inertia, and the inertia of said mass is, in turn, directly related to its mass, meaning that a greater mass achieves a greater damping effect. Therefore, taking into account feasible materials that have a relatively similar density, having a greater available volume allows a greater mass to be placed. Since the machine tool is of the lathe type, where the part is cantilevered and a drive pulley is positioned at one end between the motor and a shaft integral with the tie, which rotates the part to be machined and fixes the casing at one end of the shaft opposite the tie, it provides more options for placing a large mass, which helps to compensate for vibrations to a greater extent.

Its application is also contemplated in any machine tool where a rotating shaft entails a cantilever at the end opposite to the tool or part.

Preferably, when the machine tool is of the lathe type, the side covers of the casing will be annular in correspondence with the geometry of the inertial mass. This annular configuration of the inertial mass allows the assembly around the required elements, such as cooling, hydraulic rod for the tie, etc., without interfering with its operation.

More preferably, the casing is internally fixed to the pulley and is delimited, together with the inertial mass suspended in said casing, inside said pulley.

Placing the casing and fixing it inside the pulley integral with the tie shaft is advantageous since it uses a space in the machine that usually has no other function than transmitting the torque of the motor. In this way, the inner space of the pulley makes it possible to house a large inertial mass, without changing the outer dimensions of the machine, achieving a damping system that is as compact as possible and finding a good balance between the vibration damping capacity, without adding additional volume to the machine tool.

Alternatively, the casing is fixed to the pulley in such a way that said casing and the inertial mass suspended in said casing project beyond an outer flat face of said pulley, said outer flat face being understood as the furthest from the tie.

In the event that the external measurements of the machine are not a limiting factor, the option of having a casing, and therefore an inertial mass, of a larger size increases its damping capacity. For this reason, having an inertial mass that projects beyond the flat face of the pulley that is furthest from the tie allows the inertial mass to be larger, not only in the axial dimension, but also in the radial dimension, which greatly increases its moment of inertia.

Preferably, the casing comprises at least two through holes, distributed equidistantly along its circumferential perimeter, the through holes comprising at least one elastic sheet in contact with the inertial mass, and at least one curved plate for each hole, said plate being able to be fixed to said casing by fixing means, so that in the operational position they compress respective sheets against a circular perimeter surface of the inertial mass.

Operational position is understood to mean when the curved plates are fixed and the compression of the inertial mass is established to adapt its rigidity.

Having holes distributed equidistant from each other along the circumferential perimeter of the casing allows the centre of mass of said casing to remain on its axis of revolution. In this way, with the rotation of the shaft in the casing, no inertial forces are derived from a displacement of the centre of mass relative to its axis of rotation. On the other hand, placing at least one elastic sheet in contact with the inertial mass in each hole, compressing it with a plate that covers its respective hole, achieves an additional elastic adjustment to that of the suspension elements, in the suspension of the inertial mass relative to the casing. An additional adjustment, by means of said elastic sheets and depending on their elasticity, makes it possible for the mass to better absorb a different vibration frequency than it would with the suspension elements. Being able to compress said sheets using the plates that cover each hole also allows the absorption frequency of said sheets to be slightly varied, which is why it also serves as a fine adjustment system for the frequencies of the vibrations to be absorbed.

The use of preload plates between the curved plates and the elastic sheet to adjust the compression is also envisaged.

More preferably, the casing comprises four holes, one located in each quadrant of the circumferential perimeter, and four plates.

Four holes, one in each quadrant, makes it possible to distribute said frequency adjustment by means of the elastic sheets resulting in two orthogonal diametric axes. This makes it possible to adjust the vibration frequencies relative to two different axes. In this way, it is possible to damp vibrations in any radial direction, either directly or by adding its components.

More preferably, the pressing surface of the curved plates has a radius of curvature greater than the outer radius of the inertial mass together with the elastic sheet.

Having a larger radius of curvature of the curved plates makes it possible for the central portion of said plates to be flatter than the supposed radius of curvature that the casing would have along the hole. Since the plates are somewhat flatter than the outermost surface of the respective sheets to be covered and given that the inertial mass, the casing and even the elastic sheets are concentric, greater compression is achieved in the central portion of said sheets when the plates are fixed to the casing by means of, for example, joining means at the ends of said plates. In this way, a minimum level of compression is ensured in the central portion, which determines the direction of vibration damping in the radial or diametric direction. This level of compression can be increased and further distributed over the entire contact surface of the sheet with the inertial mass using the preload plates.

Preferably, the plurality of suspension elements has a different resulting rigidity according to directions of action perpendicular to each other.

Having a different resulting rigidity for different directions of action, such as, for example, in the direction of a diametric axis of the inertial mass, makes it possible for said mass to damp the vibrations in a different way in the direction of said axes. This enables managing the damping that is carried out by the inertial mass for different axes, being able to tune said axes to different frequencies, such that a greater range of frequencies to be damped and better damping of the target frequencies is achieved.

Preferably, in order to obtain a different resulting rigidity in directions of action perpendicular to each other, the number of suspension elements distributed in one direction of action differs from the number of elements distributed in the perpendicular direction.

Distributing the suspension elements so that there is a different number of elements on a first diametric axis of the inertial mass than on a second diametric axis perpendicular to the first diametric axis makes it possible to achieve a different aggregate or zone elasticity. In this way, similar to what was explained previously, different transverse axes of the inertial mass can be created to be tuned for different vibration frequencies. In this case, the tuning of the vibration frequencies depends on the number of elements, such that the frequency adjustment is discrete and, therefore, less refined than that which can be achieved by tightening the plates and sheets. For this reason, although other configurations are possible, it is preferable to distribute the suspension elements in such a way that they tune, or come as close as possible, to certain vibration frequencies for different diametric or radial axes, and try to fine-tune these frequencies by adjusting the sheets.

Preferably, according to another alternative embodiment to vary the rigidity according to directions of action perpendicular to each other, the elasticity of suspension elements in one direction of action differs from the elasticity of elements in the perpendicular direction.

Bearing in mind the tunability dependent on the elasticity of the suspension elements and the plates, zone elasticity for achieving diametric or radial axes tuned to different vibration frequencies can also be achieved by positioning suspension elements of different elasticity depending on their position. Placing suspension elements of the same elasticity that are diametrically opposed makes it possible to have a diametric axis of the inertial mass that is tuned to the same vibration frequency. Thus, placing suspension elements with different elasticities makes it possible to have several diametric axes tuned to different vibration frequencies. Obviously, a configuration of the suspension elements with a different elasticity on the same face of the inertial mass achieves a very similar effect to that of distributing said suspension elements in a different manner according to perpendicular directions of action. The possibility of combining both configurations to achieve better tuning of the frequencies that are to be damped for different radial or diametric axes is also evident.

Preferably, the suspension elements arranged on each flat face of the inertial mass have different elasticity on one flat face relative to the other.

Analogously to what was described above, placing suspension elements with a different elasticity for each face of the inertial mass makes it possible for one face to have a different zone or aggregate elasticity than the other. Thus, it is possible to provide the inertial mass with a certain degree of precision. In addition to the radial mode, a rotational vibration mode of the inertial mass is obtained, making it possible to tune the vibration of the inertial mass for another range of frequencies. Combining the possibilities mentioned above makes it possible to tune, for example, two different frequencies for the absorption of vibrations on different diametric or radial axes, and a third vibration frequency absorbed by the rotational vibration mode of the inertial mass, and to finish fine-tuning said frequencies, or even reach a fourth tuning, through the perimeter adjustments allowed by the sheets and the curved plates. This ensures the attenuation of vibrations for different machining parameters of the parts, thus avoiding the aforementioned chatter and the resulting defects on the surface of the machined parts.

Preferably, according to another design alternative, the centre of mass of the annular inertial mass is located on an axis of revolution of said inertial mass and displaced relative to its geometric centre.

More preferably, the annular inertial mass comprises at least two coaxial and integral rings having the same outer diameter and a different density to achieve said displacement of the centre of mass of the inertial mass.

Having a centre of gravity on the axis of rotation, but displaced relative to the geometric centre, makes it possible to generate a variation in the weight on each side of the inertial mass, which means that there is a variation in the weight supported by the suspension elements on one side and on the other. Analogously to what was described previously, this would achieve a similar effect on the inertial mass and its interaction with the suspension elements, which would provide an additional rotational vibration mode of the inertial mass, despite having the same distribution and elasticity of the suspension elements. Despite achieving a similar effect, this feature of displacing the centre of gravity can obviously be combined with having a different configuration of the suspension elements on each face, thus achieving greater adjustment of the vibration frequencies if desired. One way to displace said centre of gravity is by varying the density of the inertial mass along its axis of revolution, either with changes in material, such as joining two rings of a different material, or by adding or removing material, such as creating protrusions or voids.

### BRIEF DESCRIPTION OF THE DRAWINGS

Figure 1 shows an exploded perspective view of a passive damping system according to the present invention.
Figure 2 shows a perspective view of a machine tool with the damping system object of the present invention, with the damping system internally fixed to the pulley.
Figure 3 shows a longitudinal section view according to the axis of revolution of the machine tool of an embodiment with the damping system externally fixed to the pulley.
Figure 4 shows a detailed longitudinal section view of the assembled damping system.
Figure 5 shows a cross-sectional view of the damping system.
Figure 6 shows a perspective view of a configuration of the plurality of suspension elements to achieve different zone elasticity in different directions of action.
Figure 7 shows a perspective view of another configuration of the plurality of suspension elements to achieve different zone elasticity in different directions of action.
Figure 8 shows a perspective view of a configuration of the plurality of suspension elements to achieve a rotational vibration mode of the inertial mass.
Figure 9 shows a perspective view of a configuration of the inertial mass for the displacement of its centre of mass.

### PREFERRED EMBODIMENT OF THE INVENTION

The present invention relates to a damping system for a cantilever rotating shaft of a machine tool.

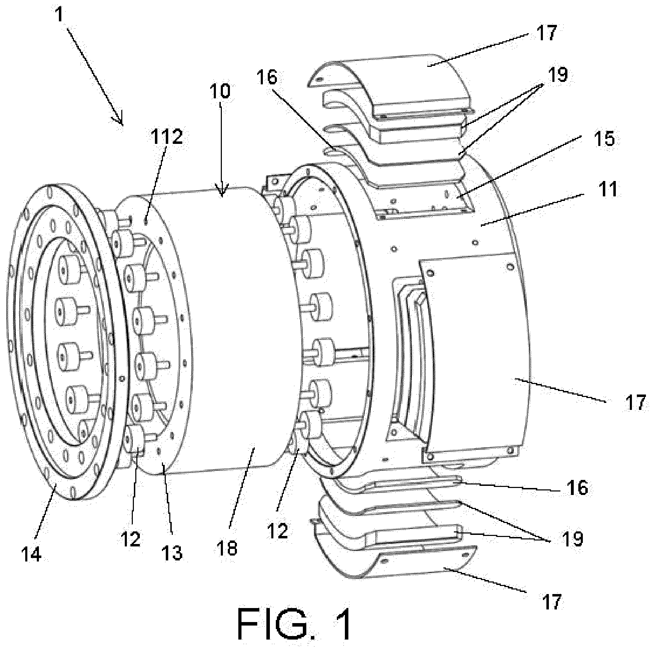

Figure 1 shows the damping system (1) in an exploded form. According to the practical embodiment shown, said damping system (1) comprises a casing (11) and an annular-shaped inertial mass (10) housed inside the casing (11). Said inertial mass (10) comprises a series of holes (112) distributed in a circular manner on both flat faces (13) of the inertial mass (11). Said holes (112) receive a plurality of suspension elements (12) that are fixed to the casing (11) by fixing means (141) such as bolts, and on its outer face by a side cover (14) joined to the casing (11), leaving the inertial mass (10) suspended by means of said suspension elements (12). Said inertial mass (10) also comprises a cylindrical perimeter surface (18). Said perimeter surface (18) is intended to come in contact with elastic sheets (16) comprised in through holes (15) of the casing (11).

In addition, the casing (11) also comprises curved plates (17) that are joined at their ends to the casing (11) with joining means. Said plates (17) press the sheets (16) against the perimeter surface (18). In this way, the inertial mass (10) is suspended inside the casing (11), due to the elasticity of the elements that connect it to said casing (11). Depending on the elasticity of the elastic elements (12) and the sheets (16), the inertial mass (10) will attenuate, to a greater or lesser extent, the vibrations of the rotating shaft transmitted through the casing (11). In this way, by tuning the elastic elements (12) according to the vibration frequency of the machine to be damped, the inertial mass (10) is capable of absorbing and counteracting part of the vibrations of the machine tool, reducing or even avoiding the vibration known as chatter.

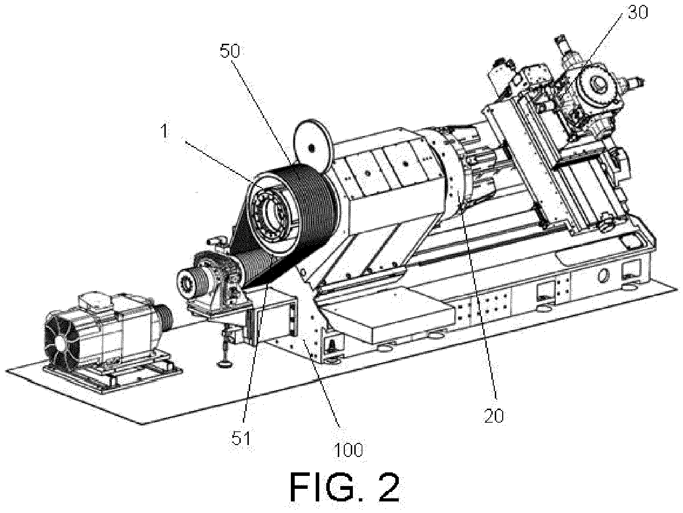

Figure 2 shows the damping system (1) in the context of its use for a machine tool (100). In this case, the representation shows a machine tool (100) of the lathe type. Said machine tool comprises a pulley (50), inside of which the damping system (1) is located. Said pulley (50) comprises an outer face (51), at the end opposite to a tie (20) for tying a part to be machined (not shown). On the other hand, the machine tool (100) also comprises a tool (30) in the form of a turret with different cutting tools.

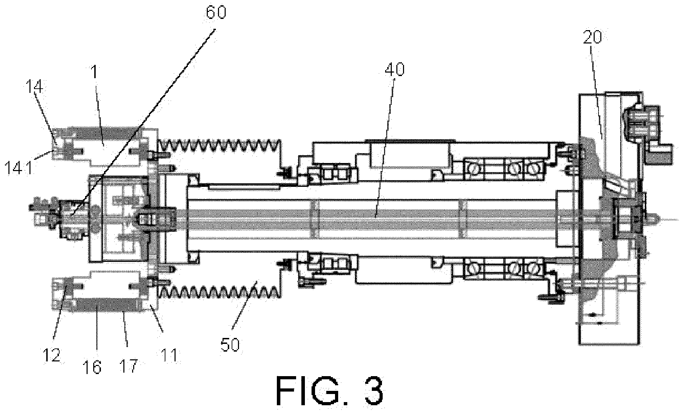

Figure 3 shows another embodiment of the invention, in which the damping system (1) is located outside a pulley (50), which transmits the torque of a motor (not shown) to a tie (20) by means of a rotating shaft (40) to which both said pulley (50) and the tie (20) are integral. The damping system (1) is fixed to the end opposite the tie (20) of the pulley (50), by means of the casing (11), which comprises the inertial mass (10) therein, suspended by means of the suspension elements (12) and the elastic sheets (16). As shown, both the configuration of the inertial mass (10) and of the casing (11) or its cover (14) have an annular shape, such that the additional component elements of the machine, such as the cooling or the hydraulic rod for the tie (60), are allowed to pass.

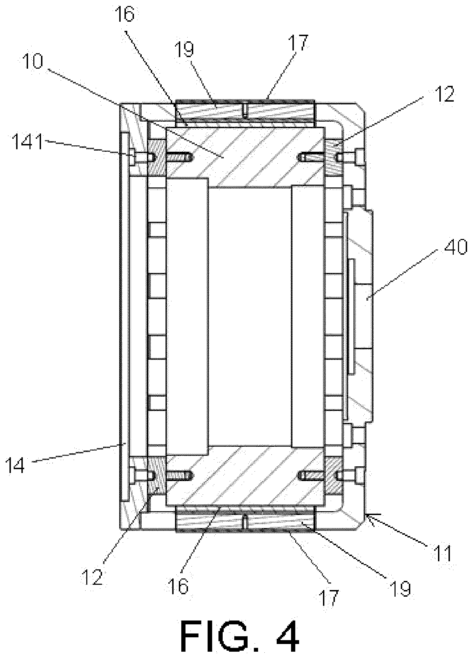

Figure 4 shows in greater detail the damping system joined to the pulley (50), which in turn is integral with the rotating shaft (40). In this case, in addition to the inertial mass (10), the suspension elements (12) fixed to the casing (11) and the sheets (16), the curved plates (17) are also shown which press said sheets (16) against the inertial mass (10) in order to contribute and adjust the vibration mode of said inertial mass (10) together with the suspension elements (12). Furthermore, as a design alternative, preload plates (19) are shown that contribute to adjusting the compression of the sheets (16). It can also be seen how the outer side cover (14) of the casing (11) is fixed by means of the joining means (141).

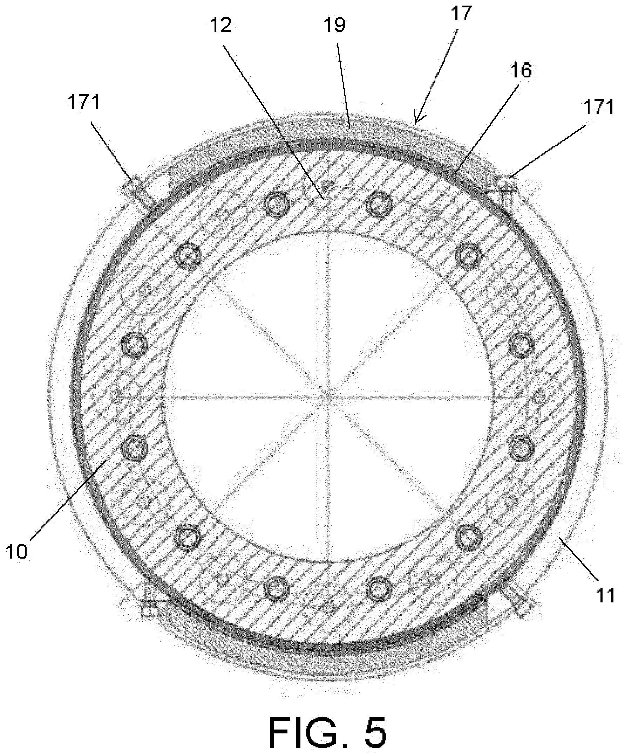

Figure 5 shows in detail the contact between the sheets (16) and the inertial mass (10). The sheets (16) are interposed between the plate (17) and the perimeter surface of the inertial mass (10), with the intermediation of the preload plates (19). The plate (17) is joined to the casing (11) by joining means (171) at its ends. The tightening of said joining means (171) causes the inner surface of the plate (17) to come in contact with an outer surface of the sheet (16), such that it compresses the sheet (16) against the perimeter surface of the inertial mass (10). To achieve a greater compression capacity, the plate (17) can have a greater radius of curvature on its inner surface than the outer surface of the inertial mass together with the sheet (16), such that only with the placement and fixing of the plate (17), said plate (17) flexes to be able to join to the casing (11) at both ends, exerting a compression preload on the sheets (16).

A step is provided in the casing (11) to fix the plate (17), the plate (17) having a corresponding step, such that one end of the plate (17) is fixed to said step of the casing (11), and the other end is fixed to the outer surface of the casing (11).

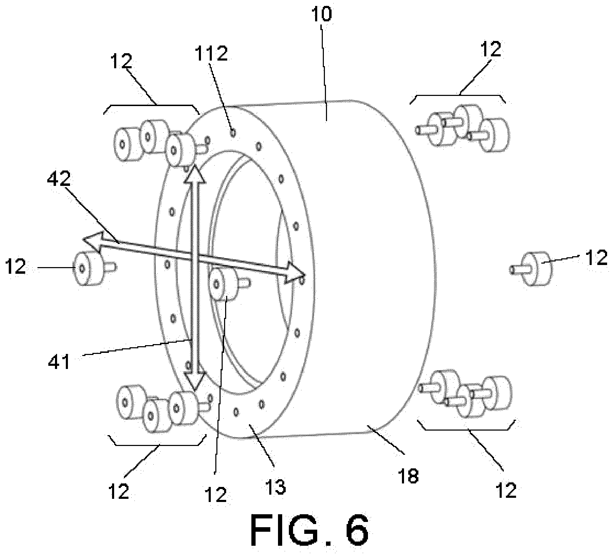

Figure 6 shows a configuration of the plurality of suspension elements (12), in which they achieve different frequencies for the radial vibration mode by means of an asymmetrical distribution, with a different numerical distribution of said suspension elements (12) according to different diametric directions of action. The asymmetrical distribution is represented schematically, showing how a greater number of suspension elements (12), for example, three, are located in the recesses (112) in a diametric direction of action (41), while in the perpendicular direction of action (42), a smaller number of said suspension elements (12) are located, for example, one. In this way, a different zone or aggregate elasticity is achieved for each of said directions of action (41) and (42) that are orthogonal to each other, thus tuning each of said directions of action (41) or diametric axes at different vibration frequencies, achieving greater damping of vibrations for these frequencies. This occurs symmetrically on both flat faces (13) of the inertial mass (10).

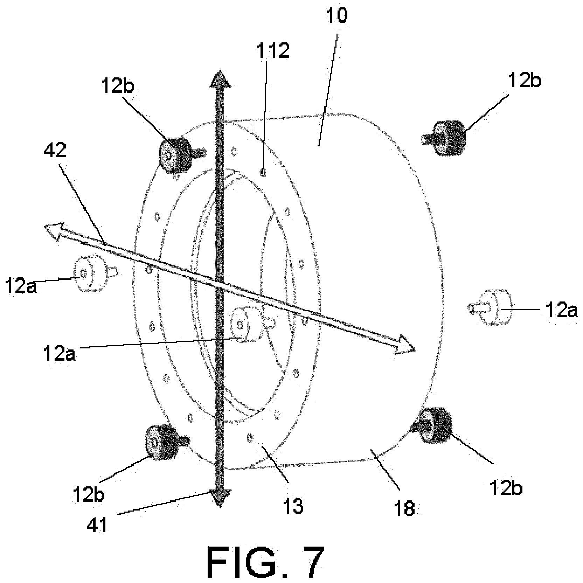

Figure 7 shows an alternative embodiment to the previous embodiment to achieve the same effect of different radial vibration frequencies according to different directions of action. In this case, said effect is achieved through the use of suspension elements (12a) and (12b) having a different elasticity. In this case, suspension elements (12b) are located in the direction of action (41), said elements having an elasticity to the suspension elements (12a) located in the direction of action (42). This occurs symmetrically on both flat faces (13) of the inertial mass (10).

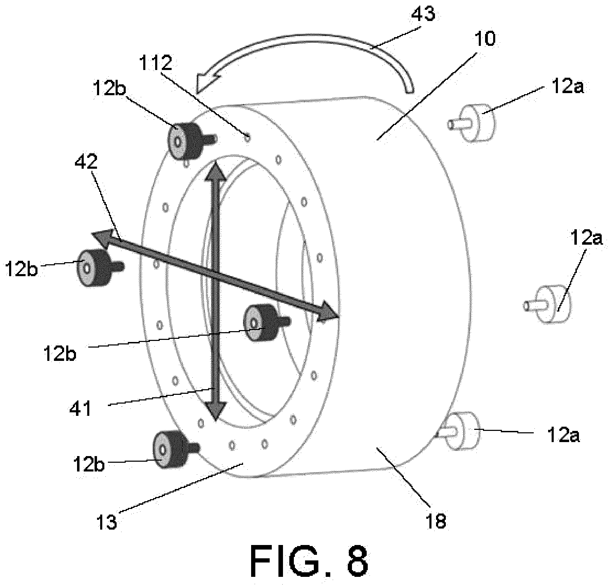

Figure 8 shows an alternative embodiment in which the suspension elements (12a) and (12b) are different depending on the flat face (13) of the inertial mass (10) on which they are located. In this way, on each flat face (13), the directions of action (41) and (42) have the same elasticity, but the elasticity of the elements (12a) is different relative to the elements (12b), thus achieving a rotational vibration mode of the inertial mass (10) represented by the arrow (43). Thus, the vibration frequency can be tuned taking into account this rotational vibration mode, expanding the range of frequencies to be damped.

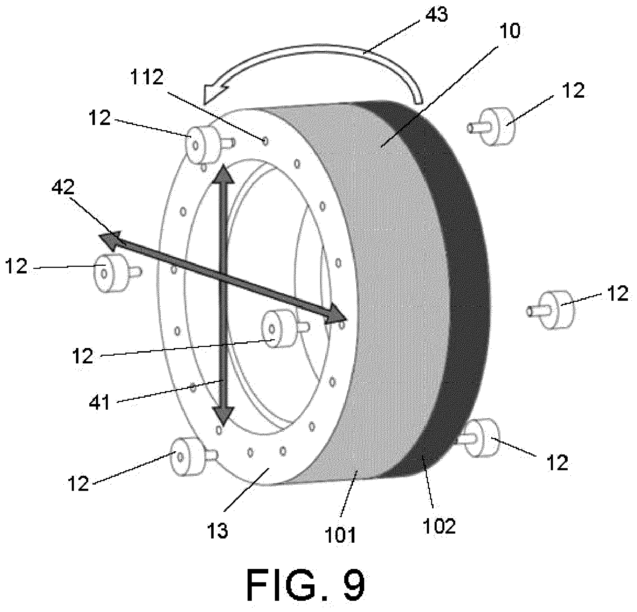

Figure 9 shows an alternative embodiment to the embodiment of Figure 8 to achieve a similar effect. In this case, it is achieved with an inertial mass (10) made up of two annular masses (101) and (102) having a different density and size. Therefore, it is possible to displace the centre of gravity of the inertial mass (10), causing a difference in weight to be suspended by the suspension elements on each flat face (13). For the same elasticity of the suspension elements (12), said difference in weight causes there to be a different level of suspension on each flat face (13), so that in a manner analogous to the embodiment of figure 8, the rotational vibration mode can be achieved, where the suspension elements (12) have a symmetrical distribution and the same elasticity for each flat face (13).

It is important to mention that the various figures 6 to 9 represent only one configuration that achieves a frequency tuning effect, but the ability to combine two or more embodiments of figures 6 to 9, depending on the desired effect, is obvious to a person skilled in the art.

The figures correspond to a non-limiting practical exemplary embodiment and variations may arise in the formation of the complement as long as its essence is not altered, which is that of having a passive damping system for a cantilever rotating shaft.

## Claims

1. A passive damping system (1) for a cantilever rotating shaft (40) of a machine tool (100) that comprises a tie (20) for holding a tool or part to be machined at one end of the rotating shaft (40), said passive damping system (1) being able to be fixed at the end of the shaft (40) opposite to the tie (20) by means of a casing (11) that houses an inertial mass (10), the annular inertial mass (10) being arranged suspended inside the casing (11) by a circumferential correlation of a plurality of elastic suspension elements (12) arranged on both opposite flat faces (13) of the inertial mass (10), the suspension elements (12) being on the casing determining the damping of the radial vibration produced in the rotating shaft (40) during machining.

2. The passive damping system (1) according to claim 1, wherein the casing (11) comprises two side covers (14) to which the plurality of suspension elements (12) are fixed so that it can be fixed to the casing (11), where at least one of the side covers (14) can be fixed to the casing (11) by joining means (141).

3. The passive damping system (1) according to any of the preceding claims, wherein the machine tool (100) comprises a pulley (50) for transmitting the rotation of the shaft (40) arranged at the end of the shaft (40) opposite to the tie (20) of the tool or part to be machined, the casing (11) being fixed to the pulley (50).

4. The passive damping system (1) according to claim 3, wherein the casing (11) is internally fixed to the pulley (50) and is delimited, together with the inertial mass (10) suspended in said casing (11), inside said pulley (50).

5. The passive damping system (1) according to claim 3, wherein the casing (11) is fixed to the pulley (50) in such a way that said casing (11) and the inertial mass (10) suspended in said casing (11) project beyond an outer flat face (51) of said pulley (50).

6. The passive damping system (1) according to any of the preceding claims, wherein the casing (11) comprises at least two through holes (15), distributed equidistantly along its circumferential perimeter, the through holes (15) comprising at least one elastic sheet (16) in contact with the inertial mass (10), and at least one curved plate (17) for each hole (15), said plate being able to be fixed to said casing (11) by fixing means (171), so that in the operational position they compress respective sheets (16) against a circular perimeter surface (18) of the inertial mass (10).

7. The passive damping system (1) according to the preceding claim, wherein the casing (11) comprises four holes (15), one located in each quadrant of the circumferential perimeter, and four plates (17).

8. The passive damping system (1) according to any of claims 6 or 7, wherein the pressing surface (178) of the plates (17) has a radius of curvature greater than the outer radius (168) of the inertial mass (10) together with the elastic sheet (16).

9. The passive damping system (1) according to any of the preceding claims, wherein the plurality of suspension elements (12a, 12b) has a different resulting rigidity according to directions of action (41, 42) perpendicular to each other.

10. The passive damping system (1) according to the preceding claim, wherein the number of suspension elements (12) in a direction of action (41) differs from the number of elements in the perpendicular direction (42).

11. The passive damping system (1) according to any of the preceding claims, wherein the elasticity of suspension elements (12a, 12b) in a direction of action (41) differs from the elasticity of elements in the perpendicular direction (42).

12. The passive damping system (1) according to any of the preceding claims, wherein the suspension elements (12) arranged on each flat face (13) of the inertial mass (10) have different elasticity on one flat face (13) relative to the other.

13. The passive damping system (1) according to any of the preceding claims, wherein the centre of mass of the annular inertial mass (10) is located on an axis of revolution of said inertial mass (10) and displaced relative to its geometric centre.

14. The passive damping system (1) according to the preceding claim, wherein the annular inertial mass (10) comprises at least two coaxial and integral rings (101, 102) having the same outer diameter and a different density.
